# EUROPÄISCHE PATENTSCHRIFT

(11) **EP 1 245 017 B1**
(45) Veröffentlichungstag und Bekanntmachung des Hinweises auf die Patenterteilung: **06.07.2005**
(21) Anmeldenummer: 00977460.5
(22) Anmeldetag: 02.11.2000
(51) Int. Cl.: G08G 1/01, G08G 1/09

(54) **VERFAHREN ZUM BESCHREIBEN UND ERZEUGEN VON STRASSENNETZEN UND STRASSENNETZ**
METHOD OF DESCRIBING AND GENERATING ROAD NETWORKS AND CORRESPONDING ROAD NETWORK
PROCEDE POUR DECRIRE ET PRODUIRE DES RESEAUX ROUTIERS ET RESEAU ROUTIER CORRESPONDANT

(30) Priorität: 11.11.1999 DE 19954498; 20.10.2000 DE 10052109
(43) Veröffentlichungstag der Anmeldung: 02.10.2002
(73) Patentinhaber: Volkswagen Aktiengesellschaft, 38436 Wolfsburg (DE); PTV AG Planung Transport und Verkehr, 76131 Karlsruhe (DE)
(72) Erfinder: WILLENBROCK, Ralf, 12047 Berlin (DE); HUBSCHNEIDER, Hans, 76131 Karlsruhe (DE); MEHLHAUS, Ulrich, 76133 Karlsruhe (DE); ORTGIESE, Michael, 76131 Karlsruhe (DE); GUSSMANN, Axel, F-67770 Stattmatten (DE)
(74) Vertreter: Meyer, Enno, Dr.
(86) Internationale Anmeldenummer: PCT/EP2000/010790
(87) Internationale Veröffentlichungsnummer: WO 2001/035370

(56) Entgegenhaltungen:
- EP-A- 0 798 540
- EP-A- 0 889 454
- EP-A- 0 902 406

## Beschreibung

Die Erfindung betrifft ein Verfahren zum Beschreiben und Erzeugen von Straßennetzen für die Ermittlung von Verkehrsinformationen oder Verkehrszustandsdaten und/oder die Ermittlung von Fahrzeiten auf Strecken oder Routenabschnitten durch mindestens einen mobilen Detektor, insbesondere ein Fahrzeug, wobei der mobile Detektor eine Positionsbestimmungseinrichtung und eine Einrichtung zur Datenkommunikation mit einer Zentrale aufweist sowie, ein Straßennetz für die Ermittlung von Verkehrsinformationen und/oder die Ermittlung von Fahrzeiten durch mindestens einen mobilen Detektor, insbesondere ein Fahrzeug.

Aus der deutschen Offenlegungsschrift DE 197 50 775 A1 ist ein Verfahren zum Selektieren von Verkehrsinformationen, die von einer Zentrale ausgesendet werden und eine Route eines Fahrzeuges betreffen, bekannt. Dabei wird die Route in Form von Wegepunkten zwischen einem Anfangspunkt und einem Zielpunkt im Verkehrsnetz bestimmt und das Selektieren von relevanten Verkehrsinformationen erfolgt, indem jeweils zwischen zwei Wegpunkten eine Zone definiert wird und einen Ort in der Zone betreffende Verkehrsinformationen als relevant selektiert werden, während einen Ort außerhalb der Zone betreffende Verkehrsinformationen als nicht relevant definiert werden. Die Zone wird dabei als Korridor zwischen zwei Parallelen zu einer Verbindungslinie zwischen zwei Wegpunkten mit vorgegebenen oder vorgebbaren Abstand zur Verbindungslinie definiert.

In der deutschen Offenlegungsschrift DE 197 53 170 A1 ist ein Verfahren zur Übertragung von eine empfohlene Route eines Fahrzeuges in einem Verkehrsnetz betreffenden Routeninformationen von einer Verkehrszentrale an ein Endgerät in einem Fahrzeug beschrieben, bei dem die Routeninformationen auf der Route des Fahrzeuges liegende Wegepunkte betreffen, wobei ein Wegepunkt jeweils an einem Ort definiert wird, an welchem das Fahrzeug in mehrere Richtungen weiterfahren kann. Zu jedem Wegepunkt werden die den Ort des Wegepunktes bestimmende Ortsdaten, die die Kreuzungsgeometrie des Wegepunktes betreffende Geometriedaten sowie die die Route durch den Wegepunkt definierende Transitionsdaten übertragen.

Desweiteren wird in der deutschen Offenlegungsschrift DE 196 43 454 A1 ein Verfahren zur Übermittlung von Daten zur Verkehrslagebeurteilung offenbart. Bei dem beschriebenen Verfahren werden von einer Vielzahl von als mobilen Detektoren arbeitenden Fahrzeugen Daten zur Verkehrslagebeurteilung in Streckenabschnitten eines Straßennetzes erfaßt und an eine Zentrale übermittelt. Zur Beurteilung der Verkehrslage ist weiterhin vorgesehen, daß aus den erfaßten Sensordaten im Fahrzeug jeweils ein aktuelles Fahrprofil gebildet wird und aus dem aktuellen Fahrprofil charakteristische Eigenschaften im Sinne von Ist-Werten abgeleitet werden. Weiterhin werden im Fahrzeug anhand vorgegebener Verkehrslageinformationen charakteristische Fahrprofileigenschaften im Sinne von erwarteten Werten gebildet, wobei die Ist-Werte und die erwarteten Werte der Fahrprofileigenschaften miteinander verglichen werden. Das Ergebnis des Vergleichs wird anhand vorgegebener Entscheidungskriterien im Fahrzeug bewertet, wobei eine Übermittlung der Daten zur Verkehrslagebeurteilung an die Zentrale jeweils nur in den Fällen stattfindet, in denen dies nach den Entscheidungskriterien vorgesehen ist

Weiterhin ist in der deutschen Offenlegungsschrift DE 197 50 774 A1 ein Verfahren zum Übermitteln von ein Verkehrsnetz betreffenden, die Verkehrssituation repräsentierenden Verkehrsinformationen von einer Verkehrszentrale an ein Endgerät eines Fahrzeuges beschrieben, wobei mindestens eine Strecke des Verkehrsnetzes betreffende Verkehrsinformationen jeweils zu Streckensegmenten der Strecke übermittelt werden zumindest unter vorgegebener Qualifizierung der Verkehrssituation in Form von qualifizierten Geschwindigkeiten in den Streckensegmenten repräsentierenden Geschwindigkeiten.

Die Druckschrift EP 0 902 406 A2 offenbart ein Verfahren zur Übertragung von Wegedaten, insbesondere per Mobilfunk, zwischen einem Fahrzeug und einer Zentrale, wobei Wegedaten übermittelt werden mit Bezeichnungen von jeweils einer oder mehrerer aneinander grenzende Kanten umfassenden Teilwegen, wobei zumindest einige Teilwege mehrere Kanten umfassen.

Ferner zeigt die Druckschrift EP o 889 454 A2 ein Verfahren zur Analyse eines Kanten und Knoten aufweisenden Verkehrsnetzes, das in Form einer zumindest Angaben über Verbindungen von Knoten und/oder von Kantenenden miteinander umfassenden, die räumliche Struktur des Verkehrsnetzes repräsentierenden Ausgangsdatei vorliegt.

Es ist die Aufgabe der Erfindung, ein Verfahren zum Beschreiben und Erzeugen von Straßennetzen und ein Straßennetz für die Ermittlung von Verkehrsinformationen und/oder die Ermittlung von Fahrzeiten durch mindestens einen mobilen Detektor zu schaffen.

Die Aufgabe wird durch die Merkmale der Patentansprüche 1 und 14 gelöst. Vorteilhafte Aus- und Weiterbildungen sind in den Unteransprüchen gelöst.

Gemäß der Erfindung ist das Straßennetz im wesentlichen durch Knotenpunkte beschrieben, die beispielsweise an Kreuzungen, Autobahnkreuzen, Autobahndreiecken, Anschlußstellen, aber auch an Raststätten oder Parkplätzen festgelegt werden. Überschreitet die Strecke zwischen zwei Knotenpunkten eine vordefinierte Länge, werden auf der Strecke Konturpunkte eingeführt, welche vorzugsweise die geographische Lage eines Links beschreiben. Ein Link ist vorzugsweise eine Verbindung zwischen zwei Knotenpunkten. Für bestimmte Anwendungsfälle kann er aber auch als eine Verbindung mehrerer Knotenpunkte oder eine Verbindung zwischen Konturpunkten oder Knotenpunkten und Konturpunkten definiert sein. Auch die Einbeziehung von Synchronpunkten in die Linkdefinition kann möglich sein. Synchronpunkte liegen in einer bestimmten Entfernung von einem Knotenpunkt auf dem Link. Diese Entfernung wird vorzugsweise durch die Knotengeometrie, insbesondere die Anzahl und den Winkel der abgehenden Links, bestimmt und ist frei wählbar. Synchronpunkte dienen zur Erkennung eines vom mobilen Detektor befahrenen Links bzw. zur Bestimmung auf welchem Teil des Links asynchrone Verkehrszustandsmeldungen vom mobilen Detektor an die Zentrale gesendet werden.

Nach einer bevorzugten Ausbildung der Erfindung ist vorgesehen, daß ein auf einen Knotenpunkt direkt folgender Konturpunkt auf einem Link als Synchronpunkt definiert wird.

Um Ungenauigkeiten bei der Ortsbestimmung des mobilen Detektors bei der Bestimmung, ob der mobile Detektor einen Knoten- Kontur- oder Synchronpunkt passiert hat, auszugleichen, können die durch konstante Koordinaten als Punkte bestimmte Knoten-, Kontur- und/oder Synchronpunkte einen durch einen Koordinaten-Bereich bestimmten Umkreis oder Fangradius aufweisen, wobei erfaßte Koordinaten des jeweiligen Koordinaten-Bereichs des Umkreises den konstanten Koordinaten des jeweiligen Knoten-, Kontur- oder Synchronpunktes zugehörig gewertet werden. Die Umkreise oder Fangradien sind vorzugsweise frei einstellbar und werden in ihren Abmessungen in Abhängigkeit von der Punktgeometrie, der Punkterstreckung der Straßenbreite und/oder der Ortsgenauigkeit bestimmt.

Zusätzlich können die Abmessungen der Umkreise von der im jeweiligen Umkreis gefahrenen durchschnittlichen Geschwindigkeit gewählt werden.

Vorzugsweise sollen sich die Umkreise von Knoten-, Kontur- oder Synchronpunkten nicht überdecken.

Nach einer Ausgestaltung der Erfindung ist vorgesehen, daß einzelne dicht nebeneinander liegende Knoten- und/oder Konturpunkte jeweils als ein Knoten- oder Konturpunkt mit umfassendem Knotenumkreis definiert sind. Mit dem umfassenden Knotenumkreis können somit komplexere Kreuzungen mit einem zentralen Knoten erfaßt werden, wodurch eine Reduzierung der Komplexität des Straßennetzes erreicht wird.

Eine andere Weiterbildung der Erfindung sieht vor, daß Links, also die Verbindung zwischen Knoten-, Kontur- und/oder Synchronpunkten, als Gasse oder Korridor von Koordinaten, vorzugsweise mit einer Breite, die dem Durchmesser der Umkreise von Synchronpunkten entspricht, definiert sind.

Die Linkserkennung, d. h. auf welchem Link sich der mobile Detektor befindet, erfolgt mittels des letzten durchfahrenen Knotenpunktes und des danach erreichten Synchronpunktes.

Knoten-, Kontur- und/oder Synchronpunkte und damit auch Links sollten außerdem änderbar, hinzufügbar, löschbar, zeitlich aktivierbar und/oder deaktivierbar und/oder verschiebbar sein.

Außerdem kann vorgesehen sein, daß zumindest ein Teil der Knotenpunkte und/oder der Links statische und/oder dynamische Attribute, insbesondere den Straßentyp und/oder die Art der Straße oder mittlere Geschwindigkeiten, aufweist.

Eine bevorzugte Ausbildung der Erfindung sieht vor, daß die Festlegung und/oder Änderung bzw. die Anpassung des Straßennetzes in der Zentrale erfolgt und zur Verkehrszustandserkennung und/oder Fahrzeitermittlung auf Abschnitten einer Route an den mobilen Detektor gesendet wird.

In einer anderen Variante kann vorgesehen sein, daß das Straßennetz in einer Einrichtung des mobilen Detektors abgelegt ist.

Eine, insbesondere synchrone Verkehrszustandsermittlung erfolgt vorzugsweise bei Erreichen des Endes des Links. Dies geschieht, indem am Ende jedes Links ein Vergleich von während des Befahrens des Links ermittelten und/oder erfaßten Bewegungsparametem des mobilen Detektors mit für den Link abgespeicherten Referenzwerten erfolgt und bei Auftreten einer vordefinierten Differenz eine Meldung vom mobilen Detektor an die Zentrale erfolgt.

Die Erzeugung des erfindungsgemäßen Straßennetzes erfolgt bevorzugter Weise in einer Datenverarbeitungseinrichtung, wobei mit Hilfe einer digitalisierten Straßenkarte des realen Straßennetzes Knoten- Kontur- und Synchronpunkte gesetzt und damit auch die einzelnen Links definiert und abgespeichert werden. Die dabei erzeugten Datensätze können im Anschluß einer beliebigen Anzahl von mobilen Detektoren zur Verfügung gestellt werden.

Nachfolgend wird die Erfindung anhand von Ausführungsbeispielen näher beschrieben. Die zugehörigen Zeichnungen zeigen:
- Fig. 1:: Ein Blockschaltbild eines Systems zur Ermittlung von Verkehrszuständen,
- Fig. 2:: einen Ausschnitt aus einem Straßennetz gemäß der Erfindung,
- Fig. 3: einen weiteren Ausschnitt aus dem erfindungsgemäßen Straßennetz und
- Fig. 4: einen Knotenpunkt Kp des erfindungsgemäßen Straßennetzes.

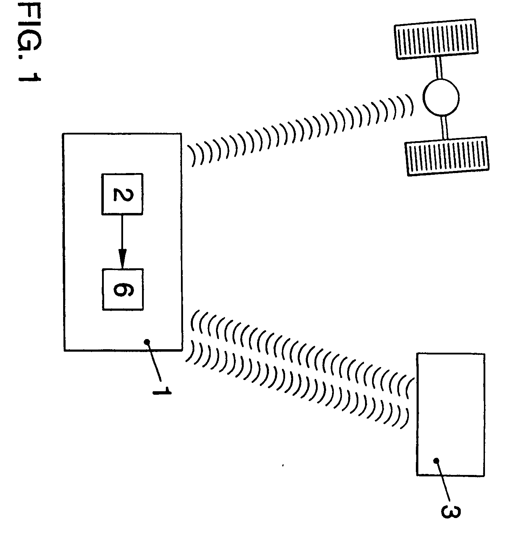

In Fig. 1 ist ein System zur Erfassung von Verkehrsinformationen und/oder der Fahrzeiten auf einer von mindestens einem mobilen Detektor 1, insbesondere ein Kraftfahrzeug, befahrenen Route dargestellt.

Der mobile Detektor 1, der eine Positionsbestimmungseinrichtung zur Ermittlung der geographischen Koordinaten seines momentanen Standortes, vorzugsweise eine Satelliten gestützte Erfassungseinrichtung 2, und zumindest eine Einrichtung 6 zur Datenkommunikation mit einer Zentrale 3 aufweist, sendet im einfachsten Fall kontinuierlich seine geographischen Koordinaten an die Zentrale 3, die aus der zeitlichen Änderung der geographischen Koordinaten Verkehrszustände und Fahrzeiten ermittelt. In anderen Fällen werden von fahrzeugeigenen Sensoren aufgenommene Bewegungsdaten vom mobilen Sensor 1 ausgewertet und beispielsweise in Abhängigkeit eines Vergleichs mit Erwartungswerten an die Zentrale 3 gesendet. Solche Verfahren sind beispielsweise aus der DE 195 13 640 C2, der DE 196 43 454 A1 oder der WO 98/36397 bekannt. Problematisch bei diesen Verfahren ist dabei, daß der mobile Sensor 1 nur seine geographische Position, nicht jedoch seine Position im tatsächlichen Verkehrsnetz kennt. Dadurch besteht die Gefahr von Falschmeldungen oder einer großen Anzahl von nicht oder nur gering relevanten Verkehrszustandsmeldungen.

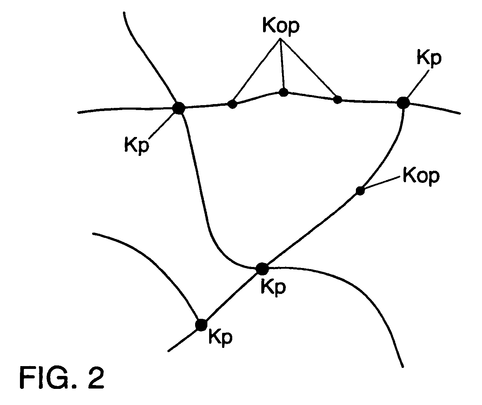

Im folgenden soll nun ein Verkehrsinformationserfassungsnetz 5 beschrieben werden, das im mobilen Detektor 1 fest abgelegt ist, wobei Änderungen bzw. Anpassungen, sog. up-date's von der Zentrale 3 über die Datenkommunikationsstrecke 4, die in diesem Fall bidirektional ausgeführt ist, an die mobilen Detektoren 1 gesendet werden. Es ist dabei denkbar, daß das gespeicherte Straßennetz oder Teile davon nur eine zeitliche Gültigkeit haben, beispielsweise daß in Verkehrsstoßzeiten ein anderes Verkehrsnetz Gültigkeit hat, als an Sonn- und Feiertagen.
Das Verkehrsnetz 5, das als Grundlage für die Verkehrsinformationsermittlung dient, ist dabei als ein Netzwerk aus einer Anzahl von Links St und einer Anzahl von Knotenpunkten Kp abgespeichert (Fig. 2), wobei an relevanten Punkten des für die Verkehrszustandsermittlung relevanten Verkehrsnetzes, wie Straßenkreuzungen, Autobahnkreuzen, -dreiecken, -anschlußstellen Knotenpunkte Kp definiert und abgelegt werden. Desweiteren können an Autobahnraststätten und Parkplätzen ebenfalls Knotenpunkte Kp eingeführt werden. Die Knotenpunkte Kp stellen außerdem Start- bzw. Endpunkte von Links St dar. Überschreitet der Abstand zwischen benachbarten Knotenpunkten Kp und damit die verbindenden Links St die Durchschnittslänge wesentlich, werdende Konturpunkte Kop eingeführt. Die Konturpunkte Kop dienen zur Annäherung eines Links St an den realen Straßenverlauf. Diese Annäherung wird mit durchschnittlich fünf Konturpunkten Kop zwischen zwei Knotenpunkten Kp erreicht, die die geopraphische Lage der Links St beschreiben. Für die Generierung der Konturpunkte Kop werden die Extrempunkte eines Straßenverlaufes ermittelt. Dazu wird eine virtuelle Luftlinienverbindung zwischen zwei Knotenpunkten Kp gebildet. Abwechselnd nach beiden Seiten dieser Verbindung wird nun die jeweils größte Entfernung der Straße zu dieser virtuellen Luftlinienverbindung sowie die Schnittpunkte mit der Luftlinienverbindung ermittelt. Hat der Straßenverlauf keinen Schnittpunkt mit der Luftlinienverbindung, werden abwechselnd Maxima und Minima bestimmt. Aus diesen ermitelten Extrema können nun die Konturpunkte Kop ermittelt werden. Gibt es mehr Extrema als Konturpunkte Kop gesetzt werden sollen, wird entschieden, ob die jeweils betragsmäßig größten Extrema als Konturpunkte Kop gesetzt werden ober ob ein zusätzlicher Knotenpunkt Kp eingefügt wird.

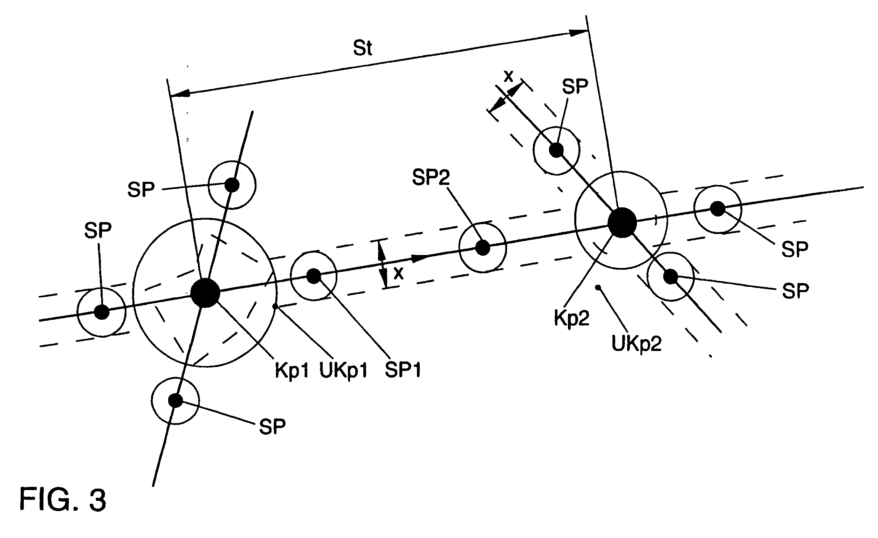

En Problem tritt bei komplexen Kreuzungen KR auf, da dort aufgrund der Anzahl der abgehenden Straßen die Lokalisierung in der Kreuzung als auch die Zuordnung des mobilen Detektors zu einem Link, insbesondere auch durch Ungenauigkeiten, die bei der Positionsbestimmung auftreten können, schwierig sein kann. Aus diesem Grund werden Synchronpunkte SP eingeführt, wie in Fig. 3 gezeigt. Die Synchronpunkte SP liegen in vorbestimmten Entfernungen vom Knotenpunkt Kp auf dem Link St. Diese Entfernungen sind durch die örtlichen Gegebenheiten, wie Abbiegespuren, die Winkel der von der realen Kreuzung KR abgehenden Straßen bzw. der vom Knotenpunkt Kp abgehenden Links St sowie der Komplexität der Kreuzung an sich bestimmt und sind frei wählbar. Die Synchronpunkte SP dienen zum einen der Abgrenzung eines Bereiches um den Knotenpunkt Kp, in dem asynchrone Verkehrszustandsmeldungen ausgeschlossen sind, und sollen zum anderen die eindeutige Zuordnung des befahrenen Links St möglich machen.
Um mögliche Fehlmeldungen des mobilen Detektors an komplexen Kreuzungen durch schwer identifizierbare Verkehrszustände und dicht aufeinanderfolgende Lichtsignalanlagen auszuschließen, wird erst beim Erreichen des dem Knotenpunkt Kp1 folgenden Startsynchronpunktes SP1 auf dem Link St die Meldung eines ermittelten asynchronen Verkehrszustandes freigegeben. Asynchrone Verkehrszustände sind zum Beispiel Staus mit sehr langen Stauzeiten oder Straßensperren. Bei Erreichen des Endsynchronpunktes SP2 wird eine asynchrone Meldung gesperrt. Im Gegensatz dazu wird die Meldung eines synchronen Verkehrszustandes, wie beispielsweise eine klassische Stop-and-Go-Situation, erst am Ende des Links St, beim Knotenpunkt Kp2 an die Zentrale abgesetzt.

Wie bereits erwähnt, dienen die Synchronpunkte außerdem der Zuordnung des mobilen Detektors zu einem Link St Zur Lokalisierung muß jeder Link St einen Startsynchronpunkt SP1 aufweisen. Die Positionsbestimmungseinrichtung des mobilen Detektors identifiziert den dem Knotenpunkt Kp1 folgenden Startsynchronpunkt SP1 in Fahrtrichtung und kann die Zuordnung zu einem Link eindeutig vornehmen.

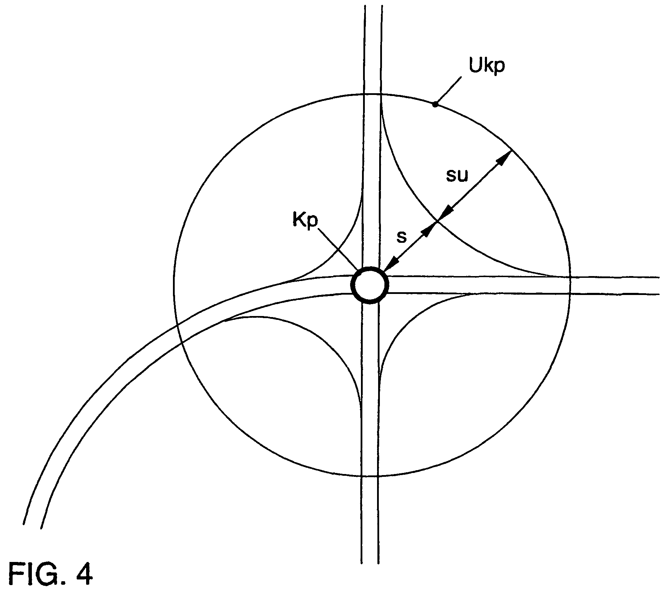

Die Knotenpunkte Kp, aber auch die Kontur- Kop und Synchronpunkte SP sind durch konstante Koordinaten als Punkte bestimmt. Um Ungenauigkeiten bei der Positionsbestimmung, insbesondere die bei einer satellitengestützten Positionsbestimmung auftreten, auszugleichen, sind um die Knotenpunkte Kp Umkreise Ukp oder Fangradien angeordnet. Solche Umkreise Ukp können trotz daß es im Ausführungsbeispiel nicht vorgesehen ist, auch um die Kontur- Kop oder Synchronpunkte SP angeordnet werden. Alle ermittelten Positionen des mobilen Detektors mit Koordinaten, die in dem Umkreis liegen, werden dann zum jeweiligen Punkt gehörig gewertet. Die Abmessungen der Umkreise Ukp oder Fangradien müssen den jeweiligen lokalen Gegebenheiten des tatsächlichen Straßenbildes angepaßt werden. Bei kleineren und einfachen Kreuzungen kann der Umkreis Ukp mit einem festen Defaultwert, der beispielsweise der Ungenauigkeit der Positionsbestimmungseinrichtung entspricht, belegt werden. Sobald aber Kreuzungen komplexer werden und mehrere abgehende Straßen, Rampen oder Zwischenstücke aufweisen, muß der Umkreis Ukp entsprechend ermittelt werden. Dazu wird von allen Straßen, die am Knotenpunkt Kp vorbeiführen, der minimale Abstand zum Knotenpunkt Kp ermittelt. Der größte dieser ermittelten Abstände s ergibt in Addition mit der Ungenauigkeit su der Positionsbestimmungseinrichtung des mobilen Detektors den Radius des Umkreises (Fig.4). Der maximale Umkreis wird auf einen bestimmten Wert gesetzt, das heißt der größte der ermittelten Abstände s darf in Addition mit der größten Ungenauigkeit su der Positionsbestimmungseinrichtung diesen Wert nicht überschreiten. Ist dies der Fall, wird die Kreuzung mit mehreren Knotenpunkten Kp erfaßt.

Um ein Verlassen des Links St zwischen zwei Knotenpunkten Kp durch den mobilen Detektor erkennen zu können, wird auf beiden Seiten des Links St ein Korridor oder eine Gasse mit einer Breite x (Fig.3) aufgespannt. Die Breite x des Korridors sollte für alle Links St gleich sein, Randbedingung ist hier die Anzahl der Konturpunkte Kop.

Im Ausführungsbeispiel wurde angegeben, daß die Links St durch zwei Knotenpunkte Kp definiert werden. Es gibt jedoch auch Anwendungsfälle, bei denen ein Link St unter Einbeziehung von Kontur- Kop und Synchronpunkten SP definiert wird oder der Link mehrere der Punkte erfaßt.

Das beschriebene Straßennetz zur Ermittlung und Weiterleitung von Verkehrszuständen und/oder Fahrzeiten sollte nicht statisch, sondern dynamisch ausgelegt sein und an das jeweilige Verkehrsaufkommen und somit an die Relevanz von Verkehrszustandsmeldungen sowie an sich verändernde räumliche und zeitliche Rahmenbedingungen und spezielle Anforderungen, beispielsweise der Kunden der Verkehrsinformationen, anpaßbar sein.

Jeder Link des erfindungsgemäßen Straßennetzes kann jederzeit entsprechend des Bedarfes aktiviert oder deaktiviert werden, zum Beispiel an verkehrsschwachen Zeiten sowie tages-, tageszeit- und jahreszeitabhängig. Außerdem können den Links St verschiedene Funktionen oder Attribute zugeordnet werden, So können Links nur für asynchrone Verkehrszustandsmeldungen oder für keine asynchronen Zustandsmeldungen innerhalb des erfindungsgemäßen Straßennetzes vorgesehen werden.

## Patentansprüche

1. Verfahren zum Beschreiben und Erzeugen eines Abbildes von Straßennetzen in Form eines Verkehrsinformationserfassungsnetzes (5) für die Ermittlung von Verkehrsinformationen und/oder die Ermittlung von Fahrzeiten,
bei dem geographische Daten mittels einer Positionsbestimmungseinrichtung (2) mindestens eines mobilen Detektors (1), insbesondere eines Fahrzeuges, erfasst werden,
zwischen dem Detektor (1) und einer Zentrale (3) eine Datenkommunikation durchführbar ist und/oder durchgeführt wird,
das reale Straßennetz oder Teile des realen Straßennetzes durch Knotenpunkte (Kp) und die Knotenpunkte (Kp) verbindende Verbindungen (St) im Verkehrsinformationserfassungsnetzes beschrieben wird,
**dadurch gekennzeichnet, dass**
zumindest auf einem Teil der Verbindungen (St) zu einem eine Kreuzung beschreibenden Knotenpunkt (Kp) in jeweils vorbestimmten Entfernungen Synchronpunkte (SP) festgelegt werden, und
die Erkennung der Verbindung (St), auf der sich der mobile Detektor befindet ,mittels des letzten durchfahrenen Knotenpunktes (Kp) und des danach erreichten Synchronpunktes erfolgt.

2. Verfahren nach Anspruch 1, **dadurch gekennzeichnet, dass** die Entfernung des Synchronpunktes (SP) vom Knotenpunkt (Kp) durch die Knotengeometrie des Knotenpunktes (Kp), die durch das reale Straßennetz vorgegeben ist, bestimmt wird.

3. Verfahren nach einem der vorangegangenen Ansprüche, **dadurch gekennzeichnet, dass** eine Verbindung (St) zwischen zwei Knotenpunkten (Kp) an den Straßenverlauf des realen Straßennetzes durch Einführung von Konturpunkten (Kop) angenähert wird, falls der Link zwischen diesen zwei Knotenpunkten (Kp) eine vordefinierte Länge überschreitet.

4. Verfahren nach Anspruch 3, **dadurch gekennzeichnet, dass** die Konturpunkte (Kop) einer Verbindung (St) dadurch festgelegt werden, das extremale Abweichungen einer Luftlinienverbindung zwischen zwei Knotenpunkten (Kp) von dem realen Straßenverlauf bestimmt werden.

5. Verfahren nach Anspruch 3 oder 4, **dadurch gekennzeichnet, dass** ein Synchronpunkt (SP) ein einem Knotenpunkt (Kp) folgender Konturpunkt (Kop) auf einer Verbindung (St) ist.

6. Verfahren nach Anspruch 1, **dadurch gekennzeichnet, dass** Knotenpunkte (Kp), Konturpunkte (Kop) und Synchronpunkte (SP) jeweils durch konstante geographische Koordinaten als Punkte bestimmt sind, die jeweils einen durch einen Koordinaten-Bereich bestimmten Umkreis (Ukp, Ukop, USP) aufweisen, wobei die Koordinaten des jeweiligen Koordinaten-Bereiches den konstanten Koordinaten des jeweiligen Knotenpunktes (Kp) oder des jeweiligen Konturpunktes (Kop) oder des jeweiligen Synchronpunktes (SP) zugehörig gewertet werden.

7. Verfahren nach Anspruch 6, **dadurch gekennzeichnet, dass** die Umkreise (Ukp, Ukop, USP) in ihren Abmessungen durch die jeweilige Knotengeometrie, die durch das reale Straßennetz vorgegeben ist, bestimmt werden.

8. Verfahren nach Anspruch 6 oder 7, **dadurch gekennzeichnet, dass** die Abmessungen der Umkreise (Ukp, Ukop, USP) von der im jeweiligen Umkreis gefahrenen durchschnittlichen Geschwindigkeit bestimmt werden.

9. Verfahren nach einem der Ansprüche 1 bis 8, **dadurch gekennzeichnet, dass** auf beiden Seiten einer Verbindung eine Gasse gebildet wird, die geographische Koordinaten umfasst, die innerhalb eines bestimmten Abstandes von der Verbindung (St) liegen, wobei ein Verlassen der Verbindung (St) über das Verlassen der Gasse erkannt wird.

10. Verfahren nach einem der Ansprüche 1 bis 9, **dadurch gekennzeichnet, dass** Knotenpunkte (Kp), Konturpunkte (Kop) und/oder Synchronpunkte (SP) änderbar, hinzufügbar, löschbar, zeitlich aktivierbar und/oder zeitlich deaktivierbar und/oder verschiebbar sind.

11. Verfahren nach einem der Ansprüche 1 bis 10, **dadurch gekennzeichnet, dass** zumindest ein Teil der Knotenpunkte (Kp) und/oder Verbindungen (St) statische und/oder dynamische Attribute des realen Straßennetzes aufweist.

12. Verfahren nach einem der Ansprüche 1 bis 11, **dadurch gekennzeichnet, dass** eine Verkehrszustandserkennung bei Erreichen des Ende der Verbindung (St) durch den mobilen Detektor (1) erfolgt.

13. Verfahren nach Anspruch 12, **dadurch gekennzeichnet, dass** am Ende jeder Verbindung ein Vergleich von während des Befahrens der Verbindung (SP) ermittelten oder erfassten Bewegungsparameters des mobilen Detektors mit für die Verbindung abgespeicherten Referenzwerten erfolgt und bei Auftreten einer vordefinierten Differenz eine Meldung vom mobilen Detektor (1) an die Zentrale (3) erfolgt.

14. Verkehrsinformationserfassungsnetz (5) als Abbild eines realen Straßennetzes für die Ermittlung von Verkehrsinformationen und/oder Ermittlung Fahrzeiten in einem realen Straßennetz durch mindestens einen mobilen Detektor (1), insbesondere ein Fahrzeug, wobei das Verkehrsinformationsnetz zumindest teilweise ein Abbild des realen Straßennetzes darstellt,
das reale Straßennetz oder Teile des realen Straßennetzes durch Knotenpunkte (Kp) und die Knotenpunkte (Kp) verbindende Verbindungen (St) im Verkehrsinformationserfassungsnetz beschrieben ist,
**dadurch gekennzeichnet,**
**dass** zumindest auf einem Teil der Verbindungen zu einem eine Kreuzung beschreibenden Knotenpunkt (kp) in jeweils vorbestimmten Entfernungen Synchronpunkte (SP) festgelegt sind, und dass die Erkennung der Verbindung (St), auf der sich der mobile Detektor befindet, mittels des letzten durchfahrenen Knotenpunktes (Kp) und des danach erreichten Synchronpunktes erfolgt.

15. Verkehrsinformationserfassungsnetz (5) nach Anspruch 14, **dadurch gekennzeichnet, dass** die Entfernung eines Synchronpunktes (SP) vom Knotenpunkt (Kp) durch die Knotengeometrie des Knotenpunktes (Kp), die durch das reale Straßennetz vorgegeben ist, bestimmt ist.

16. Verkehrsinformationserfassungsnetz (5) nach einem der Ansprüche 14 bis 15, **dadurch gekennzeichnet, dass** eine Verbindung (St) zwischen zwei Knotenpunkten (Kp) an den Straßenverlauf des realen Straßennetzes durch Einführung von Konturpunkten (Kop) angenähert ist, falls die Verbindung zwischen den zwei Knotenpunkten (Kp) eine vordefinierte Länge überschreitet.

17. Verkehrsinformationserfassungsnetz (5) nach Anspruch 16, **dadurch gekennzeichnet, dass** ein Synchronpunkt (SP) ein einem Knotenpunkt (Kp) folgender Konturpunkt (Kop) auf einer Verbindung (St) ist.

18. Verkehrsinformationserfassungsnetz (5) nach einem der Ansprüche 16 bis 17, **dadurch gekennzeichnet, dass** die Knotenpunkte (Kp) und/oder die Konturpunkte (Kop) und/oder die Synchronpunkte (SP) jeweils durch konstante geographische Koordinaten als Punkte bestimmt sind, die jeweils einen durch einen Koordinaten-Bereich bestimmten Umkreis (Ukp, Ukop, USP) aufweisen, wobei die Koordinaten des jeweiligen Koordinaten- Bereiches den konstanten Koordinaten desjeweiligen Knotenpunktes (Kp) oder des jeweiligen Konturpunktes (Kop) oder des jeweiligen Synchronpunktes (SP) zugehörig gewertet werden.

19. Verkehrsinformationserfassungsnetz (5) nach Anspruch 18, **dadurch gekennzeichnet, dass** die Umkreise (Ukp, Ukop, USP) in ihren Abmessungen durch die jeweilige Knotengeometrie, die durch das reale Straßennetz vorgegeben ist, bestimmt sind.

20. Verkehrsinformationserfassungsnetz (5) nach Anspruch 18 oder 19, **dadurch gekennzeichnet, dass** die Abmessungen der Umkreise (Ukp, Ukop, USP) von der jeweils im Umkreis gefahrenen durchschnittlichen Geschwindigkeit bestimmt werden.

21. Verkehrsinformationserfassungsnetz (5) nach einem der Ansprüche 18 bis 20, **dadurch gekennzeichnet, dass** die Abmessungen der Umkreise (Ukp, Ukop, USP) von Knotenpunkten (Kp) und/oder Konturpunkten (Kop) und/oder Synchronpunkten (SP) von der Zentrale (3) veränderbar sind.

22. Verkehrsinformationserfassungsnetz (5) nach einem der Ansprüche 18 bis 21, **dadurch gekennzeichnet, dass** sich die Umkreise (Ukp, Ukop, USP) von Knotenpunkten (Kp), Konturpunkten (Kop) und Synchronpunkten (SP) nicht überdecken.

23. Verkehrsinformationserfassungsnetz (5) nach einem der Ansprüche 14 bis 22, **dadurch gekennzeichnet, dass** auf beiden Seiten einer Verbindung (St) eine Gasse gebildet ist, die Koordinaten umfasst, die innerhalb eines bestimmten Abstandes von einer Verbindung (St) liegen.

24. Verkehrsinformationserfassungsnetz (5) nach einem der Ansprüche 14 bis 23, **dadurch gekennzeichnet, dass** Knotenpunkte (Kp) und/oder Konturpunkte (Kop) und/oder Synchronpunkte (SP) hinzufügbar, löschbar, zeitlich aktivierbar und/oder zeitlich deaktivierbar und/oder verschiebbar sind.

25. Verkehrsinformationserfassungsnetz (5) nach einem der Ansprüche 14 bis 24, **dadurch gekennzeichnet, dass** zumindest ein Teil der Knotenpunkte (Kp) und/oder der Verbindungen (St) Daten von statischen und/oder dynamischen Attributen des realen Straßennetzes aufweist.

26. Verkehrsinformationserfassungsnetz (5) nach einem der Ansprüche 14 bis 25, **dadurch gekennzeichnet, dass** das Verkehrsinformationserfassungsnetz (5) in einer Einrichtung eines mobilen Detektors ablegbar und/oder abgelegt ist.

## Claims

1. Method of describing and generating an image of road networks in the form of a traffic information collection network (5) for acquiring traffic information and/or acquiring travel times,
in which geographic data is collected by means of a position-determining device (2) of at least one mobile detector (1), in particular of a vehicle,
data communication can be carried out and/or is carried out between the detector (1) and a control centre (3),
the real road network or parts of the real road network are described by nodes (Kp) and connections (St) connecting the nodes (Kp) in the traffic collection network,
**characterized in that**
synchronism points (SP) are defined at respectively predetermined distances on at least some of the connections (St) to a node (Kp) describing an intersection, and
the connection (St) on which the mobile detector is located is detected by means of the last node (Kp) travelled through and the synchronism point reached after that.

2. Method according to Claim 1, **characterized in that** the distance between the synchronism point (SP) and the node (Kp) is determined by the node geometry of the node (Kp) which is predefined by the real road network.

3. Method according to one of the preceding claims, **characterized in that** a connection (St) between two nodes (Kp) is approximated to the course of the road of the real road network by introducing contour points (Kop) if the link between these two nodes (Kp) exceeds a predefined length.

4. Method according to Claim 3, **characterized in that** the contour points (Kop) of a connection (St) are defined by determining extreme deviations between a line of sight connection between two nodes (Kp) and the real course of the road.

5. Method according to Claim 3 or 4, **characterized in that** a synchronism point (SP) is a contour point (Kop) following a node (Kp) on a connection (St).

6. Method according to Claim 1, **characterized in that** nodes (Kp), contour points (Kop) and synchronism points (SP) are each determined by constant geographic coordinates as points which each have a circumscribed circle (Ukp, Ukop, USP) determined by a coordinate area, wherein the coordinates of the respective coordinate area are evaluated as being associated with the constant coordinates of the respective node (Kp) or of the respective contour point (Kop) or of the respective synchronism point (SP).

7. Method according to Claim 6, **characterized in that** the circumscribed circles (Ukp, Ukop, USP) are determined in terms of their dimensions by the respective node geometry which is predefined by the real road network.

8. Method according to Claim 6 or 7, **characterized in that** the dimensions of the circumscribed circles (Ukp, Ukop, USP) are determined by the average speed travelled in the respective circumscribed circle.

9. Method according to one of Claims 1 to 8, **characterized in that** a corridor is formed on each side of a connection, said corridor covering geographic coordinates which lie within a specific distance from the connection (St), wherein departure from the corridor is used to detect departure from the connection (St).

10. Method according to one of Claims 1 to 9, **characterized in that** nodes (Kp), contour points (Kop) and/or synchronism points (SP) can be changed, added, deleted, activated in a timed fashion and/or deactivated in a timed fashion and/or moved.

11. Method according to one of Claims 1 to 10, **characterized in that** at least some of the nodes (Kp) and/or connections (St) have static and/or dynamic attributes of the real road network.

12. Method according to one of Claims 1 to 11, **characterized in that** a traffic state detection is carried out by the mobile detector (1) when the end of the connection (St) is reached.

13. Method according to Claim 12, **characterized in that** a comparison between movement parameters which are acquired or sensed by the mobile detector while the connection (SP) is being travelled through is made with reference values which are stored for the connection and when a predefined difference occurs the mobile detector (1) signals the control centre (3).

14. Traffic information collection network (5) as a representation of a real road network for acquiring traffic information and/or determining travel times in a real road network by means of at least one mobile detector (1), in particular a vehicle, wherein the traffic information network at least partially constitutes a representation of the real road network, the real road network or parts of the real road network are described by nodes (Kp) and connections (St) which connect the nodes (Kp) in the traffic information collection network, **characterized in that** synchronism points (SP) are defined at respectively predetermined distances at least on some of the connections leading to a node (Kp) which describes an intersection, and **in that** the detection of the connection (St) on which the mobile detector is located is carried out by means of the last node (Kp) travelled through and the synchronism point reached after that.

15. Traffic information collection network (5) according to Claim 14, **characterized in that** the distance between a synchronism point (SP) and the node (Kp) is determined by the node geometry of the node (Kp) which is predefined by the real road network.

16. Traffic information collection network (5) according to one of Claims 14 to 15, **characterized in that** a connection (St) between two nodes (Kp) is approximated to the course of the road network by introducing contour points (Kop) if the connection between the two nodes (Kp) exceeds a predefined length.

17. Traffic information collection network (5) according to Claim 16, **characterized in that** a synchronism point (SP) is a contour point (Kop) which follows a node (Kp) on a connection (St).

18. Traffic information collection network (5) according to one of Claims 16 to 17, **characterized in that** the nodes (Kp) and/or the contour points (Kop) and/or the synchronism points (SP) are each determined by constant geographic coordinates as points which each have a circumscribed circle (Ukp, Ukop, USP) which is determined by a coordinate area, wherein the coordinates of the respective coordinate area are evaluated as being associated with the constant coordinates of the respective node (Kp) or of the respective contour point (Kop) or of the respective synchronism point (SP).

19. Traffic information collection network (5) according to Claim 18, **characterized in that** the circumscribed circles (Ukp, Ukop) USP) are determined in terms of their dimensions by the respective node geometry which is predefined by the real road network.

20. Traffic information collection network (5) according to Claim 18 or 19, **characterized in that** the dimensions of the circumscribed circles (Ukp, Ukop, USP) are determined by the average speed respectively travelled in the circumscribed circle.

21. Traffic information collection network (5) according to one of Claims 18 to 20, **characterized in that** the dimensions of the circumscribed circles (Ukp, Ukop, USP) of nodes (Kp) and/or contour points (Kop) and/or synchronism points (SP) can be varied from the control centre (3).

22. Traffic information collection network (5) according to one of Claims 18 to 21, **characterized in that** the circumscribed circles (Ukp, Ukop, USP) of nodes (Kp), contour points (Kop) and synchronism points (SP) do not overlap.

23. Traffic information collection network (5) according to one of Claims 14 to 22, **characterized in that** a corridor which comprises coordinates which lie within a specific distance from a connection (St) is formed on each side of a connection (St).

24. Traffic information collection network (5) according to one of Claims 14 to 23, **characterized in that** nodes (Kp) and/or contour points (Kop) and/or synchronism points (SP) can be added, deleted, activated in a timed fashion and/or deactivated in a timed fashion and/or moved.

25. Traffic information collection network (5) according to one of Claims 14 to 24, **characterized in that** at least some of the nodes (Kp) and/or of the connections (St) have data on static and/or dynamic attributes of the real road network.

26. Traffic information collection network (5) according to one of Claims 14 to 25, **characterized in that** the traffic information collection network (5) can be stored and/or is stored in a device of a mobile detector.

## Revendications

1. Procédé pour décrire et produire une image de réseaux routiers sous la forme d'un réseau d'acquisition d'informations de trafic (5) pour l'évaluation d'informations de trafic et/ou l'évaluation de temps de trajet, avec lequel des données géographiques sont détectées au moyen d'un dispositif de détermination de la position (2) d'au moins un détecteur mobile (1), notamment d'un véhicule, une transmission de données peut être effectuée et/ou est effectuée entre le détecteur (1) et une centrale (3), le réseau routier réel ou des parties du réseau routier réel sont décrits dans le réseau d'acquisition d'informations de trafic par des points nodaux (Kp) et des liaisons (St) qui relient les points nodaux (Kp), **caractérisé en ce que** des points de synchronisation (SP) sont fixés au moins sur une partie des liaisons (St) vers un point nodal (Kp) décrivant une intersection à des distances à chaque fois prédéfinies, et la détection de la liaison (St) sur laquelle se trouve le détecteur mobile s'effectue au moyen du dernier point nodal (Kp) franchi et du point de synchronisation atteint ensuite.

2. Procédé selon la revendication 1, **caractérisé en ce que** la distance entre le point de synchronisation (SP) et le point nodal (Kp) est déterminée par la forme géométrique du noeud du point nodal (Kp), laquelle est prédéfinie par le réseau routier réel.

3. Procédé selon l'une des revendications précédentes, **caractérisé en ce qu'**une liaison (St) entre deux points nodaux (Kp) est approchée du tracé des routes du réseau routier réel en introduisant des points de contournement (Kop) si la liaison entre ces deux points nodaux (Kp) dépasse une longueur préalablement définie.

4. Procédé selon la revendication 3, **caractérisé en ce que** les points de contournement (Kop) d'une liaison (St) sont définis par le fait que les écarts extrêmes par rapport à une ligne à vol d'oiseau entre deux points nodaux (Kp) sont déterminés à partir du tracé réel de la route.

5. Procédé selon la revendication 3 ou 4, **caractérisé en ce qu'**un point de synchronisation (SP) est un point de contournement (Kop) qui suit un point nodal (Kp) sur une liaison (St).

6. Procédé selon la revendication 1, **caractérisé en ce que** les points nodaux (Kp), les points de contournement (Kop) et les points de synchronisation (SP) sont à chaque fois déterminés par des coordonnées géographiques constantes en tant que points qui présentent à chaque fois une circonférence (Ukp, Ukop, USP) déterminée par une plage de coordonnées, les cordonnées de la plage de coordonnées correspondante étant évaluées en association avec les cordonnées constantes du point nodal (Kp) correspondant ou du point de contournement (Kop) correspondant ou du point de synchronisation (SP) correspondant.

7. Procédé selon la revendication 6, **caractérisé en ce que** les dimensions des circonférences (Ukp, Ukop, USP) sont déterminées par la forme géométrique du noeud qui est prédéfinie par le réseau routier réel.

8. Procédé selon la revendication 6 ou 7, **caractérisé en ce que** les dimensions des circonférences (Ukp, Ukop, USP) sont déterminées par la vitesse moyenne à la quelle est empruntée la circonférence correspondante.

9. Procédé selon l'une des revendications 1 à 8, **caractérisé en ce que** des deux côtés d'une liaison est formée une voie qui comprend des coordonnées géographiques qui se trouvent au sein d'un écart donné par rapport à la liaison (St), le fait de quitter la liaison (St) étant détecté par le fait de quitter la voie.

10. Procédé selon l'une des revendications 1 à 9, **caractérisé en ce que** les points nodaux (Kp), les points de contournement (Kop) et/ou les points de synchronisation (SP) peuvent être modifiés, ajoutés, supprimés, activés dans le temps et/ou désactivés dans le temps et/ou déplacés.

11. Procédé selon l'une des revendications 1 à 10, **caractérisé en ce qu'**au moins une partie des poins nodaux (Kp) et/ou des liaisons (St) présente des attributs statiques et/ou dynamiques du réseau routier réel.

12. Procédé selon l'une des revendications 1 à 11, **caractérisé en ce qu'**une détection de l'état du trafic est effectuée lorsque le détecteur mobile (1) atteint la fin de la liaison (St).

13. Procédé selon la revendication 12, **caractérisé en ce qu'**à la fin de chaque liaison a lieu une comparaison entre les paramètres de déplacement du détecteur mobile déterminés ou détectés pendant le parcours de la liaison (SP) et des valeurs de référence enregistrées pour la liaison et, en présence d'une différence prédéfinie, un message est envoyé du détecteur mobile (1) vers la centrale (3).

14. Réseau d'acquisition d'informations de trafic (5) représentant un réseau routier réel pour l'évaluation d'informations de trafic et/ou l'évaluation de temps de trajet dans un réseau routier réel par le biais d'au moins un détecteur mobile (1), notamment un véhicule, le réseau d'informations de trafic représentant au moins partiellement une image du réseau routier réel, le réseau routier réel ou des parties du réseau routier réel sont décrits par des points nodaux (Kp) et des liaisons (St) qui relient les points nodaux (Kp) au sein du réseau d'acquisition d'informations de trafic, **caractérisé en ce que** des points de synchronisation (SP) sont fixés au moins sur une partie des liaisons vers un point nodal (Kp) décrivant une intersection à des distances à chaque fois prédéfinies, que la détection de la liaison (St) sur laquelle se trouve le détecteur mobile s'effectue au moyen du dernier point nodal (Kp) franchi et du point de synchronisation atteint ensuite.

15. Réseau d'acquisition d'informations de trafic (5) selon la revendication 14, **caractérisé en ce que** la distance entre un point de synchronisation (SP) et le point nodal (Kp) est déterminée par la forme géométrique du point nodal (Kp), laquelle est prédéfinie par le réseau routier réel.

16. Réseau d'acquisition d'informations de trafic (5) selon l'une des revendications 14 à 15, **caractérisé en ce qu'**une liaison (St) entre deux points nodaux (Kp) est approchée du tracé des routes du réseau routier réel en introduisant des points de contournement (Kop) si la liaison entre les deux points nodaux (Kp) dépasse une longueur préalablement définie.

17. Réseau d'acquisition d'informations de trafic (5) selon la revendication 16, **caractérisé en ce qu'**un point de synchronisation (SP) est un point de contournement (Kop) qui suit un point nodal (Kp) sur une liaison (St).

18. Réseau d'acquisition d'informations de trafic (5) selon l'une des revendication 16 à 17, **caractérisé en ce que** les points nodaux (Kp) et/ou les points de contournement (Kop) et/ou les points de synchronisation (SP) sont à chaque fois déterminés par des coordonnées géographiques constantes en tant que points qui présentent à chaque fois une circonférence (Ukp, Ukop, USP) déterminée par une plage de coordonnées, les cordonnées de la plage de coordonnées correspondante étant évaluées en association avec les cordonnées constantes du point nodal (Kp) correspondant ou du point de contournement (Kop) correspondant ou du point de synchronisation (SP) correspondant.

19. Réseau d'acquisition d'informations de trafic (5) selon la revendication 18, **caractérisé en ce que** les dimensions des circonférences (Ukp, Ukop, USP) sont déterminées par la forme géométrique du noeud qui est prédéfinie par le réseau routier réel.

20. Réseau d'acquisition d'informations de trafic (5) selon la revendication 18 ou 19, **caractérisé en ce que** les dimensions des circonférences (Ukp, Ukop, USP) sont déterminées par la vitesse moyenne à la quelle est empruntée la circonférence correspondante.

21. Réseau d'acquisition d'informations de trafic (5) selon l'une des revendications 18 à 20, **caractérisé en ce que** les dimensions des circonférences (Ukp, Ukop, USP) des points nodaux (Kp) et/ou des points de contournement (Kop) et/ou des points de synchronisation (SP) peuvent être modifiées par la centrale (3).

22. Réseau d'acquisition d'informations de trafic (5) selon l'une des revendications 18 à 21, **caractérisé en ce que** les circonférences (Ukp, Ukop, USP) des points nodaux (Kp), des points de contournement (Kop) et des points de synchronisation (SP) ne se chevauchent pas.

23. Réseau d'acquisition d'informations de trafic (5) selon l'une des revendications 14 à 22, **caractérisé en ce que** des deux côtés d'une liaison (St) est formée une voie qui comprend des coordonnées qui se trouvent au sein d'un écart donné par rapport à une liaison (St).

24. Réseau d'acquisition d'informations de trafic (5) selon l'une des revendications 14 à 23, **caractérisé en ce que** les points nodaux (Kp) et/ou les points de contournement (Kop) et/ou les points de synchronisation (SP) peuvent être ajoutés, supprimés, activés dans le temps et/ou désactivés dans le temps et/ou déplacés.

25. Réseau d'acquisition d'informations de trafic (5) selon l'une des revendications 14 à 24, **caractérisé en ce qu'**au moins une partie des poins nodaux (Kp) et/ou des liaisons (St) présente les données des attributs statiques et/ou dynamiques du réseau routier réel.

26. Réseau d'acquisition d'informations de trafic (5) selon l'une des revendications 14 à 25, **caractérisé en ce que** le réseau d'acquisition d'informations de trafic (5) peut être logé ou est logé dans un dispositif d'un détecteur mobile.
